# EUROPÄISCHE PATENTANMELDUNG

(11) **EP 1 329 369 A1**
(43) Veröffentlichungstag der Anmeldung: **23.07.2003**
(21) Anmeldenummer: 03000468.3
(22) Anmeldetag: 11.01.2003
(51) Int. Cl.: B60T 15/04, F16K 11/16

(54) **Vorrichtung zur Steuerung der Druckluftzufuhr zu einem Druckzylinder**

(30) Priorität: 22.01.2002 AT 952002
(71) Anmelder: MAN Steyr AG, 4400 Steyr (AT)
(72) Erfinder: Wittberger, Gerhard, Ing., 4523 Neuzeug (AT)

(57) **Zusammenfassung**

Die Erfindung betrifft eine Vorrichtung zur Steuerung der Druckluftzufuhr in einen Druckraum (24) eines Druckzylinders (25) für eine Betätigung von dessen Kolben (26), der mechanisch oder hydraulisch auf ein zu betätigendes Organ einer nachgeordneten Gerätschaft einwirkt.

Kernstück der erfindungsgemäßen Lösung ist ein spezielles mechanisches 3/2-Wegesteuerventil mit Merkmalen der im Anspruch 1 angegebenen Art.

## Beschreibung

Die Erfindung betrifft eine Vorrichtung zur Steuerung der Druckluftzufuhr in einen Druckraum eines Druckzylinders für eine Betätigung von dessen Kolben, der mechanisch oder hydraulisch auf ein zu betätigendes Organ einer nachgeordneten Gerätschaft einwirkt.

Es ist bekannt, zur Steuerung der Druckluftzufuhr in einen Druckraum eines Druckzylinders für eine Betätigung von dessen Kolben in die Speiseleitung zwischen Druckluftquelle und Druckraum ein elektromechanisches Absperrventil einzubauen, das durch Befehle einer Steuereinrichtung aus einer Absperrposition in eine Durchlassposition und zurück schaltbar ist. Solche Steuerungen lassen aber keine feinfühlige Dosierung des Druckes und der im Druckraum arbeitswirksamen Druckluftmenge zu.

Es ist daher Aufgabe der Erfindung, eine Vorrichtung der gattungsgemäßen Art so auszubilden, dass sie universell einsetzbar ist und mit einfachen Mitteln eine feinfühlige Dosierung des Druckes und der im Druckraum des Druckzylinders arbeitswirksamen Druckluftmenge ermöglicht.

Diese Aufgabe ist bei einer Vorrichtung der gattungsgemäßen Art entsprechend den Kennzeichen des Anspruchs 1 erfindungsgemäß dadurch gelöst, dass ein mechanisches 3/2-Wegesteuerventil vorgesehen ist, das in einer Aufnahmebohrung seines Gehäuses hinter einem Primärsteuerkolben einen mit der Atmosphäre in Verbindung stehenden Entspannungsraum, vor einem Zwischenboden einen permanent mit Druckluft versorgten Einspeiseraum, zwischen Primärsteuerkolben und Zwischenboden einen mit dem Druckraum des Druckzylinders permanent verbundenen Steuerdruckraum und zwei vorgespannte Rückstelldruckfedern aufweist, von denen die eine den Primärsteuerkolben in Richtung seiner durch ein Organ definierten Grundstellung und die andere den Sekundärsteuerkolben von vorne nach hinten in Richtung Zwischenboden drückt, dass der Primärsteuerkolben im Zusammenwirken mit dem Sekundärsteuerkolben ein hinteres Absperrventil bildet, mit dem ein die Verbindung zwischen den Steuerdruckraum und dem Entspannungsraum herstellender primärkolbeninterner Überströmkanal auf- und zusteuerbar ist, dass der Sekundärsteuerkolben im Zusammenwirken mit dem Zwischenboden ein vorderes Absperrventil bildet, mit dem ein die Verbindung zwischen den Einspeiseraum und dem Steuerdruckraum herstellender zwischenbodeninterner Überströmkanal auf- und zusteuerbar ist, dass zur Betätigung des 3/2-Wegesteuerventils ein über eine Steuerdruckfeder auf den Primärsteuerkolben einwirkender Stößel vorgesehen ist, dass bei unbetätigtem 3/2-Wegesteuerventil das vordere Absperrventil geschlossen, das hintere Absperrventil dagegen offen und somit der Druckraum des Druckzylinders mit der Atmosphäre verbunden ist, und dass bei Betätigung des 3/2-Wegesteuerventils durch Drücken auf den Stößel durch die hierdurch bewirkte Axialverschiebung des Primärsteuerkolbens das hintere Absperrventil geschlossen und anschließend oder gleichzeitig das vordere Absperrventil geöffnet wird und dadurch dem Druckraum im Druckzylinder Druckluft aus der Druckluftquelle zuführbar ist, solange, bis sich ventilintern ein Kraftgleichgewicht einstellt, durch das das vordere Absperrventil selbsttätig wieder geschlossen wird, wobei aufgrund des noch geschlossenen hinteren Absperrventils der Druck im Druckraum des Druckzylinders gehalten bleibt, solange, bis der Stößel entlastet wird und das hintere Absperrventil öffnet.

Das erfindungsgemäße mechanische 3/2-Wegesteuerventil ist feinfühlig mit geringem Kraftaufwand betätigbar, was in eine entsprechend feinfühlige Dosierung der an seinem Eingang mit einem vorgegebenen Druckniveau anstehenden und zum Druckraum im Druckzylinder durchzusteuernden Druckluft umsetzbar ist, gleichermaßen aber auch eine anschließende feinfühlige Entlastung des Druckraumes ermöglicht. Diese Feindosierung ist durch das Zusammenwirken der beiden ventilinternen Kolben und des Zwischenbodens zur Bildung zweier Absperrventile sowie der Rückstellfedern erzielbar, bei welchen Teilen es sich um vergleichsweise einfache und billig herstellbare Bauteile handelt, die auch einfach im Ventilgehäuse montierbar sind. Insofern ist das 3/2-Wegesteuerventil insgesamt sehr kostengünstig und klein-bauend realisierbar.

Nachstehend ist die erfindungsgemäße Lösung anhand zweier in der Zeichnung dargestellter Ausführungsbeispiele noch näher erläutert. In der Zeichnung zeigen:
- Fig. 1: ein erstes Ausführungsbeispiel der erfindungsgemäßen Vorrichtung,
- Fig. 2: das erste Ausführungsbeispiel der erfindungsgemäßen Vorrichtung in Verbindung mit einem Anwendungsfall, und
- Fig. 3: ein zweites Ausführungsbeispiel der erfindungsgemäßen Vorrichtung.

In den Figuren sind gleiche bzw. einander entsprechende Bauteile mit gleichen Bezugszeichen angezogen.

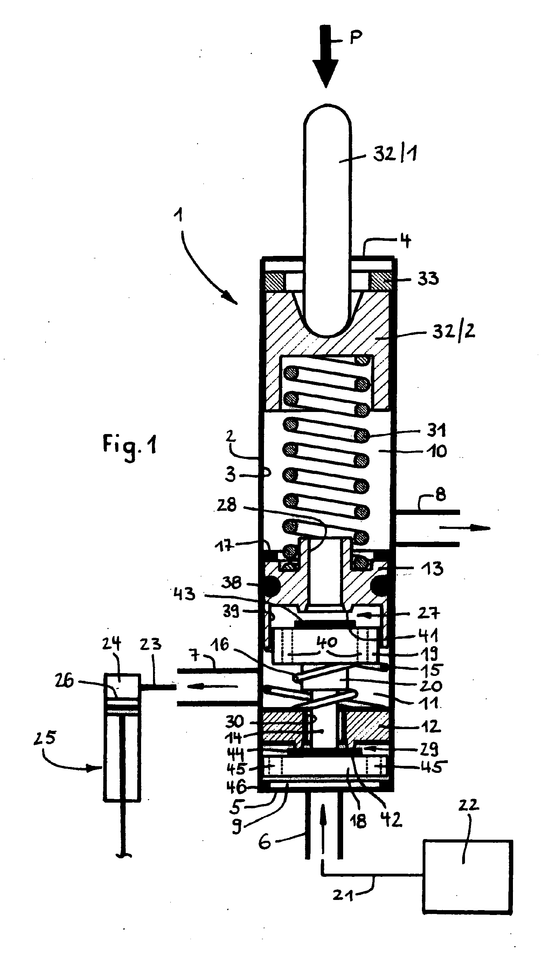

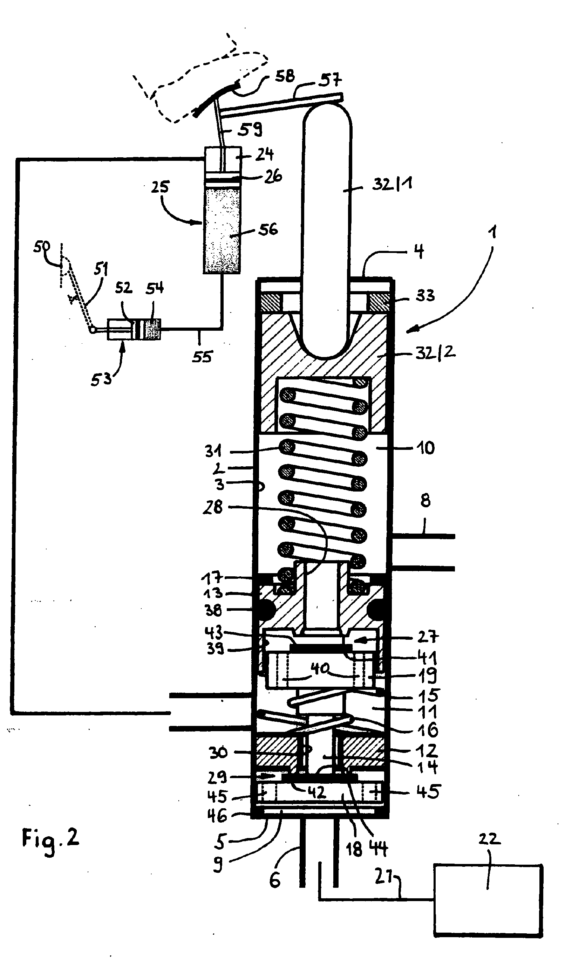

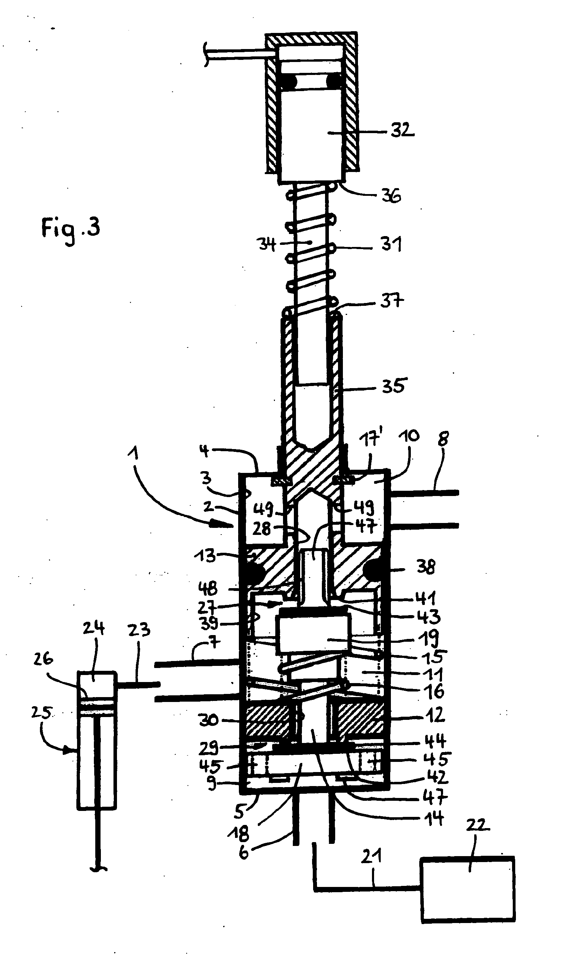

Kernstück der erfindungsgemäßen Vorrichtung ist ein mechanisches 3/2-Wegesteuerventil 1, das ein Gehäuse 2 mit einer kreiszylindrischen Aufnahmebohrung 3, die vorn und hinten durch jeweils einen Deckel 4 bzw. 5 verschlossen ist, und drei Anschlüsse aufweist, nämlich einen Eingang 6, einen Steuerausgang 7 und einen Entlastungsausgang 8. In der Aufnahmebohrung 3 sind drei Teilräume, nämlich ein vorderer Einspeiseraum 9, ein hinterer Entspannungsraum 10 und dazwischen ein Drucksteuerraum 11 gegeben, außerdem ein Zwischenboden 12 ortsfest eingebaut, sowie ein Primärsteuerkolben 13, ein Sekundärsteuerkolben 14 und zwei Rückstelldruckfedern 15, 16 angeordnet. Der Primärsteuerkolben 13 wirkt zwischen Steuerdruckraum 11 und Entspannungsraum 10 und der Zwischenboden 12 trennt den Einspeiseraum 9 vom Steuerdruckraum 11. Die Rückstelldruckfeder 15 stützt sich einenendes rückseitig am Zwischenboden 12, andernendes vorn am Primärsteuerkolben 13 ab und drückt diesen in Richtung eines Organs 17, das ― wenn er mit einer rückseitigen Schulter an diesem anliegt ― seine Grundstellung definiert. Das Organ 17 ist im Fall des Beispiels von Fig. 1 und 2 durch einen ortsfest in die Aufnahmebohrung 3 eingebauten Sicherungsring, z. B. Seegerring gebildet. Im Fall des Beispiels von Fig. 3 dient der hintere Deckel 4 als Anschlag, an dem ein primärsteuerkolbenfester Anschlagring 17' zur Anlage kommt und solchermaßen die Grundstellung des Primärsteuerkolbens 13 definiert. Der Sekundärsteuerkolben 14 besteht aus einem vorderen, im Bereich des Einspeiseraumes 9 wirkenden Kolbenabschnitt 18, einem davon beabstandeten und durchmesserkleineren hinteren, im Bereich des Steuerdruckraumes 11 wirkenden Kolbenabschnitt 19 und einer diese beiden Kolbenabschnitte 18, 19 verbindenden Koppelstange 20. Die Rückstelldruckfeder 16 drückt den Sekundärsteuerkolben 14 mit seinem vorderen Kolbenabschnitt 18 in Richtung Zwischenboden 12 und kann sich entweder zwischen der Rückseite des Zwischenbodens 12 und der Vorderseite des hinteren Kolbenabschnitts 19 oder zwischen dem vorderen Deckel 5 und der Vorderseite des vorderen Kolbenabschnitts 18 erstrecken. Der Eingang 6 des 3/2-Wegesteuerventils 1 ist über eine Leitung 21 mit einer Druckluftquelle 22 verbunden, von der Druckluft mit einem eingestellten Druckniveau von z. B. 8 bar permanent bereitgestellt und in den Einspeiseraum 9 eingespeist wird. Der Steuerausgang 7 des 3/2-Wegesteuerventils 1 steht einerseits mit dem Steuerdruckraum 11 und andererseits über eine Druckleitung 23 mit einem Druckraum 24 in einem Druckzylinder 25 in permanenter Verbindung, in dem durch zugeführte Druckluft ein Kolben 26 verschiebbar ist. Der Entspannungsraum 10 des 3/2-Wegesteuerventils 1 steht über den Entlastungsausgang 8 permanent mit der Atmosphäre in Verbindung. Innerhalb des 3/2-Wegesteuerventils 1 bildet der Primärsteuerkolben 13 im Zusammenwirken mit dem Sekundärsteuerkolben 14 ein hinteres Absperrventil 27, mit dem ein die Verbindung zwischen dem Steuerdruckraum 11 und dem Entspannungsraum 10 herstellender primärkolbeninterner Überströmkanal 28 auf- und zusteuerbar ist. Der Sekundärsteuerkolben 18 bildet im Zusammenwirken mit dem Zwischenboden 12 ein vorderes Absperrventil 29, mit dem ein die Verbindung zwischen dem Einspeiseraum 9 und dem Steuerdruckraum 11 herstellender zwischenbodenintemer Überströmkanal 30 auf- und zusteuerbar ist.

Zur Betätigung des 3/2-Wegesteuerventils 1 ist ein über eine Steuerdruckfeder 31 auf den Primärsteuerkolben 13 einwirkender Stößel 32 vorgesehen. Im Fall des Beispiels von Fig. 1 und 2 ist der Stößel 32 zweiteilig ausgebildet. Dabei ist dessen erstes Teil 32/1 koaxial zur Ventilachse durch den hinteren Deckel 4 in die Aufnahmebohrung 3 des 3/2-Wegesteuerventils 1 hineingeführt und wirkt dort bei seiner Betätigung mechanisch auf ein zweites Stößelteil 32/2 ein. Dieses ist in der Aufnahmebohrung 3 axial leichtgängig verschiebbar geführt, liegt in unausgelenkter Grundstellung an einem dahinter ortsfest oder in Axialrichtung einstellbar in die Aufnahmebohrung 3 eingebautem Anschlagorgan 33 an und überträgt eine vom ersten Stößelteil 32/1 her initiierte Verschiebung über die sich hier vorne an ihm abgestützte und zentrierte Steuerdruckfeder 31 auf den Primärsteuerkolben 13 für dessen Axialverschiebung. Im Beispiel von Fig. 3 dagegen ist der Stößel 32 mit seinem Schaft 34 axial leichtgängig verschiebbar in bzw. an einem Primärsteuerkolbenteil 35 geführt angeordnet, das fest entweder an der Rückseite des Primärsteuerkolbens 13 angeformt oder befestigt ist und koaxial zur Ventilachse hinten durch den Deckel 4 aus der Aufnahmebohrung 3 herausgeführt ist. Die Grundstellung des Primärsteuerkolbens 13 ist in diesem Fall durch das am hinteren Deckel 4 innen anliegende Organ 17' definiert, das am Primärsteuerkolbenteil 35 z. B. durch einen in eine Nut eingesetzten Sicherungsring oder angeformten Bund gebildet ist. Zwischen einander zugewandten Schultern 36, 37 am Stößel 32 bzw. Primärsteuerkolbenteil 35 ist in diesem Fall außerhalb des Gehäuses 2 die Steuerdruckfeder 31 aufgenommen.

Nachstehend ist auf Einzelheiten der unterschiedlichen Ausführungsformen näher eingegangen.

Der Primärsteuerkolben 13 weist außenseitig einen in einer Ringnut eingesetzten Dichtungsring 38 auf, wodurch er mit seiner zylindrischen Außenseite weitgehend leckagefrei, aber trotzdem noch leichtgängig in der Aufnahmebohrung 3 des Ventilgehäuses 2 geführt ist. Außerdem weist der Primärsteuerkolben 13 vorderseitig eine koaxiale, kreiszylindrische Vertiefung 39 auf, in die der Sekundärsteuerkolben 14 im Fall des Beispiels von Fig. 1 mit seinem hinteren scheibenförmigen Kolbenabschnitt 19 für eine axial leichtgängig verschiebbare Führung eintaucht. Durchlässe 40 im Kolbenabschnitt 19, die in Form von internen Bohrungen oder externen Axialnuten realisiert sein können, stellen in diesem Ausführungsbeispiel sicher, dass die Druckluft im Steuerdruckraum 11 sowohl vor als auch hinter dem Kolbenabschnitt 19 gleichermaßen wirksam ist bzw. diesen passieren kann. Des weiteren zweigt vom Boden der Vertiefung 39 der Überströmkanal 28 in Form einer zur Ventilachse koaxialen Durchgangsbohrung ab. Eingangs derselben ist am Boden der Vertiefung 39 ein Ringvorsprung mit einer stirnseitigen Ventilsitzringfläche 41 angeordnet. Ebenso weist der Zwischenboden 12 einen sich koaxial zur Ventilachse um die Koppelstange 20 des Sekundärsteuerkolbens 14 herum erstreckenden Überströmkanal 30 und eingangs desselben auf seiner Vorderseite einen Ringvorsprung mit einer stirnseitigen Ventilsitzringfläche 42 auf. An der Rückseite jedes der beiden Kolbenabschnitte 18, 19 des Sekundärsteuerkolbens 14 ist ein beispielsweise scheiben- oder kegelförmig ausgebildetes Ventilschließorgan 43 bzw. 44 angeordnet, wobei das hintere Ventilschließorgan 43 im Zusammenwirken mit der Ventilsitzfläche 41 vorn am Primärsteuerkolben 13 das hintere Absperrventil 27 und das vordere Ventilschließorgan 44 im Zusammenwirken mit der Ventilsitzfläche 42 vorn am Zwischenboden 12 das vordere Absperrventil 29 bildet. Mit seinem scheibenförmig und kreiszylindrischen vorderen Kolbenabschnitt 18 ist der Sekundärsteuerkolben 14 axial leichtgängig verschiebbar in der Aufnahmebohrung 3 des Gehäuses 2 geführt, wobei Durchlässe 45 im Kolbenabschnitt 18, die in Form von internen Bohrungen oder externen Axialnuten realisiert sein können, sicherstellen, dass die in den Einspeiseraum 9 eingespeiste Druckluft sowohl vor als auch hinter dem Kolbenabschnitt 18 gleichermaßen wirksam ist bzw. letzterem ungehindert passieren kann.

Dem Sekundärsteuerkolben 14 ist ein Organ zugeordnet, mit dem sein beispielsweise einige Zehntel Millimeter betragender Öffnungshub begrenzbar ist. Dieses Organ kann entweder durch einen Anschlagring 46, der räumlich um das zulässige Verschiebe-Hubmaß von der Vorderseite des Kolbenabschnitts 18 in die Aufnahmebohrung 3 eingebaut ist, oder einen Ringbund an der Innenseite des vorderen Deckels 5, der um das Verschiebehubmaß von der Vorderseite des Kolbenabschnitts 18 beabstandet ist, oder durch einen äußeren Ringvorsprung oder punktuelle Vorsprünge 47 (siehe Fig. 3) an der Vorderseite des vorderen Kolbenabschnitts 18, der bzw. die eine dem Verschiebe-Hubmaß entsprechende Länge aufweisen und innenseitig am vorderen Deckel 5 zur Anlage kommen, gebildet sein.

Im Fall des Beispiels gemäß Fig. 3 ist der Sekundärsteuerkolben 14 hinten mit einem äußere Längsnuten 48 für Luftdurchlass aufweisenden Zapfen 47 in einer zur Ventilachse koaxialen Sacklochbohrung im Primärsteuerkolben 13 axial leichtgängig verschiebbar geführt, die einen Teil des Überströmkanals 28 bildet, bis in den Bereich des Primärsteuerkolbenteils 35 hineingereicht und über Querauslässe 49 mit dem Entspannungsraum 10 in Kommunikation steht.

Da sich die Koppelstange 20 durch den Überströmkanal 30 hindurch erstreckt und die beiden Kolbenabschnitte 18, 19 beiderseits des ortsfest in der Aufnahmebohrung 3 gegebenen Zwischenbodens 12 angeordnet sind, muss der Sekundärsteuerkolben 14 aus wenigstens zwei Teilen und so hergestellt sein, dass eine Montage dieser Teile beiderseits des Zwischenbodens 12 möglich ist.

Nachstehend ist auf die Funktion des erfindungsgemäßen 3/2-Wegesteuerventils 1 näher eingegangen.

Bei unbetätigtem 3/2-Wegesteuerventil 1 ist das vordere Absperrventil 29 geschlossen, das hintere Absperrventil 27 dagegen offen und somit der Druckraum 24 des Druckzylinders 25 mit der Atmosphäre verbunden. In diesem unbetätigten Zustand ist der Primärsteuerkolben 13 durch die Rückstellfeder 15 mit seiner Rückseite gegen das seine Grundstellung definierende Organ 17 (Fig. 1, 2) bzw. mit seinem Sicherungsring 17' gegen den hinteren Boden 4 angedrückt. Der Sekundärsteuerkolben 14 ist mit seinem vorderen Kolbenabschnitt 18 durch die Rückstelldruckfeder 16 so kraftbeaufschlagt, dass das vordere Absperrventil 29 auch gegen die Kraft der im Einspeiseraum 9 befindlichen Druckluft geschlossen gehalten bleibt.

Sobald eine Betätigung des Druckzylinders 25 für einen Arbeitsvorgang von dessen Kolben 26 erfolgen soll, wird dieses über das erfindungsgemäße 3/2-Wegesteuerventil 1 eingeleitet, und zwar durch eine Betätigung des Stößels 32 in Richtung des Pfeils P (nur in Fig. 1 gezeigt). Diese Betätigung des Stößels 32 kann auf verschiedene Weise, dem jeweiligen Anwendungsfall angepasst, erfolgen, also beispielsweise manuell oder mit dem Fuß durch direktes Einwirken (wie im Fall von Fig. 1) oder über ein mechanisches Zwischenglied wie Hebel oder Pedal (wie im Fall von Fig. 2) oder motorisch oder hydraulisch (wie im Fall von Fig. 3). Diese in jedem Fall aber nur einen geringem Kraftaufwand erfordernde Betätigung des Stößels 32 wird gedämpft über die Steuerdruckfeder 31 an den Primärsteuerkolben 13 weitergegeben, wodurch dieser - wenn die Rückstellkraft der auf ihn wirkenden Druckfeder 15 überwunden ist - aus seiner Grundstellung heraus nach vorne zum Sekundärsteuerkolben 14 hin bewegt wird. Sobald der Primärsteuerkolben 13 mit seiner stirnseitigen Ventilsitzringfläche 41 am hinteren Ventilschließorgan 43 des Sekundärsteuerkolbens 14 zur Anlage kommt, ist das hintere Absperrventil 27 geschlossen, damit die Druckentlastungsstrecke unterbrochen bzw. abgesperrt und es kann nun ein Druckaufbau innerhalb des Steuerdruckraumes 11, der Steuerdruckleitung 23 und im Druckraum 24 des Druckzylinders 25 erfolgen. Dies geschieht aber erst, wenn durch entsprechend weiteres, stärkeres Betätigen des Stößels 32 der nun auf Anschlag am Primärsteuerkolben 13 abgestützte Sekundärkolben 14 axial aus seiner vorherigen Druckluftsperrstellung (wie in der Zeichnung dargestellt) verschoben und dabei das vordere Absperrventil 29 geöffnet, das heißt, das vordere Ventilschließorgan 44 von der vorderen Ventilsitzringfläche 42 am Zwischenboden 12 abgehoben wird. Durch den solchermaßen entstandenen Spalt kann nun die im Einspeiseraum 9 anstehende Druckluft aus letzterem heraus über den Überströmkanal 30 in den Steuerdruckraum 11 und von diesem über den Steuerausgang 17 und die Steuerdruckleitung 23 in den Druckraum 24 des Druckzylinders 25 gelangen, wodurch eine Betätigung des darin wirkenden Kolbens 26 und eine entsprechende Bewegungs- oder Kraftübertragung an eine nachgeordnete Einrichtung erfolgt. Das heißt, es kann im Druckraum 24 Druckluft mit einem Druck wirksam werden, wie er von der Druckluftquelle 22 mit z. B. 8 bar dem Eingang 6 des 3/2-Wegesteuerventils 1 zugeführt wird. Die Besonderheit des erfindungsgemäßen 3/2-Wegesteuerventils 1 liegt darin, dass die Menge der dem Druckraum 24 des Druckzylinders 25 zuzuführenden Druckluft direkt proportional zum Betätigungsweg des Stößels 32 ist, das heißt, bei maximaler Stößelbetätigung wird die maximale Verschiebung des Druckkolbens 26 erreicht. In jeder gehaltenen Zwischenstellung des Stößels 32 stellt sich zwischen der Steuerdruckfeder 31 und den entgegenwirkenden Kräften der Rückstelldruckfedern 15, 16 sowie der ins 3/2-Wegesteuerventil 1 eingespeisten Druckluft ein Kraftgleichgewicht ein, was - sobald dieses erreicht ist - zur Folge hat, dass der Sekundärsteuerkolben 14 mit seinem vorderen Ventilschließorgan 44 wieder an der Ventilsitzringfläche 42 am Zwischenboden 12 zur Anlage kommt, also das vordere Absperrventil 29 wieder geschlossen wird, wodurch der Druck in den solchermaßen abgesperrten Räumen 11, 23, 24 kraftwirksam am Kolben 26 des Druckzylinders 25 aufrechterhalten und dieser solchermaßen auch in seiner zugehörigen Verschiebeposition gehalten bleibt.

Für eine Rückkehr des Kolben 26 im Druckzylinder 25 in Richtung seiner Grundstellung aus einer wie vorstehend beschriebenen ausgelenkten Position ist die Haltekraft am Stößel 32 zu reduzieren, so dass dieser sich in Richtung seiner Ausgangsstellung bewegen kann, wonach sich die beiden Druckfedern 15 und 16 entspannen und der Primärsteuerkolben 13 sich in Richtung seiner Grundstellung hin bewegt wird. Dadurch löst sich die Ventilsitzringfläche 41 am Primärsteuerkolben 13 vom Ventilschließorgan 43 am Sekundärsteuerkolben 14, das heißt, das hintere Absperrventil 27 wird geöffnet und über den solchermaßen entstehenden Spalt ist die Entlastungsstrecke ventilintern wieder offen, mit der Folge, dass sich der Druck im Druckraum 24 des Druckzylinders 25 über die Steuerdruckleitung 23, den Steuerdruckraum 11, den Überströmkanal 28 im Primärsteuerkolben 13, den Entspannungsraum 10 und den Entlastungsausgang 8 auf Atmosphärendruck entspannen kann.

Figur 2 zeigt die Anwendung des erfindungsgemäßen 3/2-Wegesteuerventlls zur kraftunterstützten Betätigung einer Kupplung 50 in einem Kraftfahrzeug. Diese Kupplung 50 ist vereinfacht durch ihre Ausrückplatte dargestellt, welche über ein mechanisches Gestänge 51 am Kolben 52 eines hydraulischen Nehmerzylinders 53 angelenkt ist. Der Druckraum 54 des Nehmerzylinders 53 ist über eine hydraulische Druckleitung 55 mit dem hydraulischen Ausgangsdruckraum 56 des in diesem Anwendungsfall als Geberzylinder fungierenden Druckzylinders 25 verbunden. Der Stößel 32; 32/1, 32/2 des 3/2-Wegesteuerventils 1 ist entweder direkt oder über ein schematisch angelenktes Gestänge 57 durch Niedertreten eines Kupplungspedals 58 betätigbar. Die mechanische Stößelverbindung 59 zwischen dem Pedal 58 und dem Kolben 26 im als Geberzylinder fungierenden Druckzylinder 25 ist für das Zusammenwirken von Pedal 58, 3/2-Wegesteuerventil 1 und Druckzylinder 25 für eine kraftunterstützte Betätigung von dessen Kolben 26 nicht nötig, sie dient im betrachteten Anwendungsfall lediglich als Sicherheitseinrichtung, die bei Ausfall oder Defekten des 3/2-Wegesteuerventils 1 oder von dessen Druckluftversorgung 22 wirksam wird und dann eine rein mechanische Betätigung des Kolbens 26 im als Geberzylinder fungierenden Druckzylinder 25 ermöglicht, dieses dann aber mit wesentlich höherem Kraftaufwand.

Bei einem Niedertreten des Kupplungspedals 58 wird die Funktion des erfindungsgemäßen 3/2-Wegesteuerventils 1 über eine entsprechende Betätigung des Stößels 32; 32/1, 32/2 in Gang gesetzt und stellt sich im Hinblick auf die Betätigung des Kolbens 26 wie weiter vorn schon beschrieben dar. Eine Verschiebung des Druckkolbens 26 aus seiner Grundstellung bewirkt über den geschlossenen hydraulischen Kraftübertragungsweg der Teile 56, 55 und 54 eine synchrone Verschiebung des Kolbens 52 im Nehmerzylinder 53 und damit einhergehend über das Gestänge 51 ein Öffnen der Kupplung 50. Zum Schließen der Kupplung 50 ist das Pedal 58 zu entlasten, mit dem eine Entlastung des Stößels 32; 32/1, 32/2 und eine Druckentlastung über das 3/2-Wegesteuerventil 1 einhergeht, wie weiter vorn schon beschrieben, mit der Folge, dass der Druckraum 24 des als Geberzylinder fungierenden Druckzylinders 25 entlastet wird und die mechanische Schließkraft der Kupplung 50 über das Gestänge 51 eine Rückstellung des Kolbens 52 im Nehmerzylinder 53 und über die hydraulischen Säulen in den Räumen 54, 55, 56 synchron hierzu auch des Kolbens 26 im Druckzylinder 25 in Richtung der jeweiligen Kolbengrundstellung bewirkt. Mit besonderem Vorteil erlaubt das erfindungsgemäße 3/2-Wegesteuerventil 1 jede beliebige z. B. schleifende Zwischenstellung der Kupplung 50 zwischen voll geschlossen und voll offen.

## Patentansprüche

1. Vorrichtung zur Steuerung der Druckluftzufuhr in einem Druckraum eines Druckzylinders für eine Betätigung von dessen Kolben, der mechanisch oder hydraulisch auf ein zu betätigendes Organ einer nachgeordneten Gerätschaft einwirkt, **dadurch gekennzeichnet, dass** ein mechanisches 3/2-Wegesteuerventil (1) vorgesehen ist, das in einer Aufnahmebohrung (3) seines Gehäuses (2) hinter einem Primärsteuerkolben (13) einen mit der Atmosphäre in Verbindung stehenden Entspannungsraum (10), vor einem Zwischenboden (12) einen permanent mit Druckluft versorgten Einspeiseraum (9), zwischen Primärsteuerkolben (13) und Zwischenboden (12) einen mit dem Druckraum (24) des Druckzylinders (25) permanent verbundenen Steuerdruckraum (11) und zwei vorgespannte Rückstelldruckfedern (15, 16) aufweist, von denen die eine (15) den Primärsteuerkolben (13) in Richtung seiner durch ein Organ (4, 17) definierten Grundstellung und die andere (16) den Sekundärsteuerkolben (14) von vorne nach hinten in Richtung Zwischenboden (12) drückt, dass der Primärsteuerkolben (13) im Zusammenwirken mit dem Sekundärsteuerkolben (14) ein hinteres Absperrventil (27; 41, 43) bildet, mit dem ein die Verbindung zwischen Steuerdruckraum (11) und Entspannungsraum (10) herstellender primärkolbeninterner Überströmkanal (28) auf- und zusteuerbar ist, dass der Sekundärsteuerkolben (14) im Zusammenwirken mit dem Zwischenboden (12) ein vorderes Absperrventil (29; 42, 44) bildet, mit dem ein die Verbindung zwischen Einspeiseraum (9) und Steuerdruckraum (11) herstellender zwischenbodeninterner Überströmkanal (30) auf- und zusteuerbar ist, dass zur Betätigung des 3/2-Wegesteuerventils (1) ein über eine Steuerdruckfeder (31) auf den Primärsteuerkolben (13) einwirkender Stößel (32; 32/1, 32/2) vorgesehen ist, dass bei unbetätigtem 3/2-Wegesteuerventil (1) das vordere Absperrventil (29) geschlossen, das hintere Absperrventil (27) dagegen offen und somit der Druckraum (24) des Druckzylinders (25) mit der Atmosphäre verbunden ist, und dass bei Betätigung des 3/2-Wegesteuerventils (1) durch Einwirken auf den Stößel (32) durch die hierdurch bewirkte Axialverschiebung des Primärsteuerkolbens (7) das hintere Absperrventil (11/5, 7/7) geschlossen und anschließend oder gleichzeitig das vordere Absperrventil (11/4, 10/5) geöffnet wird und dadurch dem Druckraum (24) im Druckzylinder (25) Druckluft aus der Druckluftquelle (22) zuführbar ist, solange, bis sich ventilintern ein Kraftgleichgewicht einstellt, durch das das vordere Absperrventil (29) selbsttätig wieder geschlossen wird, wobei aufgrund des noch geschlossenen hinteren Absperrventils (27) der Druck im Druckraum (24) des Druckzylinders (25) gehalten bleibt, solange, bis der Stößel (32) entlastet wird und das hintere Absperrventil (27) öffnet.

2. Vorrichtung nach Anspruch 1, **dadurch gekennzeichnet, dass** das 3/2-Wegesteuerventil (1) einen
- Eingang (6), über den der Einspeiseraum (9) von einer Druckluftquelle (22) her permanent mit Druckluft mit eingestelltem Druckniveau versorgbar ist,
- Steuerausgang (7), über den der Steuerdruckraum (11) über eine Steuerdruckleitung (23) permanent mit dem Druckraum (24) des Druckzylinders (25) in Verbindung steht,
- Entlastungsausgang (8), über den der Entspannungsraum (20) permanent mit der Atmosphäre in Verbindung steht,
aufweist.

3. Vorrichtung nach Anspruch 1, **dadurch gekennzeichnet, dass** der sich zwischen Steuerdruckraum (11) und Entspannungsraum (10) erstreckende Primärsteuerkolben (13) einen zur Ventilachse koaxialen Überströmkanal (28) aufweist, dass der Sekundärsteuerkolben (14) zwei voneinander beabstandete, über eine Koppelstange (20) miteinander verbundene Kolbenabschnitte (18, 19) aufweist, wobei der vordere Kolbenabschnitt (18) im Bereich des Einspeiseraumes (9) und der hintere Kolbenabschnitt (19) im Bereich des Steuerdruckraumes (11) wirkt, dass der Zwischenboden (12) einen zur Ventilachse koaxialen, sich um die Koppelstange (20) herum erstreckenden Überströmkanal (30) aufweist, und dass an der Rückseite jedes Kolbenabschnitts (18, 19) des Sekundärsteuerkolbens (14) ein scheiben- oder kegelartig ausgebildetes Ventilschließorgan (43, 44) angeordnet ist, von denen
- das hintere (43) im Zusammenwirken mit einer Ventilsitzringfläche (41) vorn am Primärsteuerkolben (13) das hintere Absperrventil (27) bildet, mit dem der die Verbindung zwischen Steuerdruckraum (11) und Entspannungsraum (10) herstellende primärsteuerkolbeninterne Überströmkanal (28) absperrbar oder freigebbar ist,
- das vordere (44) im Zusammenwirken mit einer Ventilsitzringfläche (42) vorn am Zwischenboden (12) das vordere Absperrventil (29) bildet, mit dem der die Verbindung zwischen Einspeiseraum (9) und Steuerdruckraum (11) herstellende zwischenbodeninterne Überströmkanal (30) absperrbar oder freigebbar ist.

4. Vorrichtung nach Anspruch 1, **dadurch gekennzeichnet, dass** das die Grundstellung des Primärsteuerkolbens (13) definierende Organ (17) durch einen ortsfest in die Aufnahmebohrung (3) im Gehäuse (2) des 3/2-Wegesteuerventils (1) eingebauten Sicherungsring gebildet ist, an dem der Primärsteuerkolben (13) in Grundstellung mit einer rückseitigen Schulter anliegt.

5. Vorrichtung nach Anspruch 1, **dadurch gekennzeichnet, dass** an einem am Primärsteuerkolben (13) hinten abragenden Primärsteuerkolbenteil (35) in einer Ringnut ein Sicherungsring wie Seegerring (17') eingesetzt oder ein Bund ausgeformt ist, der bei Anlage innen am hinteren Deckel (4) des Gehäuses (2) die Grundstellung des Primärsteuerkolbens (13) definiert.

6. Vorrichtung nach Anspruch 1, **dadurch gekennzeichnet, dass** der Öffnungshub des Sekundärsteuerkolbens (11) durch ein Organ begrenzt ist, das entweder durch einen vor dem Sekundärsteuerkolben (11) in die Aufnahmebohrung (3) des Gehäuses (2) eingebauten Anschlagring (13) oder einen Ringvorsprung an der Innenseite des vorderen Deckels (5) oder durch einen äußeren Ringvorsprung oder punktuelle Vorsprünge (47) an der Vorderseite des vorderen Kolbenabschnitts (18) gebildet ist.

7. Vorrichtung nach einem der Ansprüche 1 und 3, **dadurch gekennzeichnet, dass** der Zwischenboden (12) sich quer zur Ventilachse erstreckend ortsfest in die Aufnahmebohrung (3) des Gehäuses (2) eingebaut ist und an seiner Vorderseite einen den Eingangsbereich des zentralen Überströmkanals (30) bildenden Ringvorsprung aufweist, dessen vordere Stirnfläche die Ventilsitzringfläche (42) des vorderen Absperrventils (29) bildet.

8. Vorrichtung nach Anspruch 1, **dadurch gekennzeichnet, dass** der Primärsteuerkolben (13) mit seiner zylindrischen Außenwand leichtgängig axial verschiebbar in der Aufnahmebohrung (3) des Gehäuses (2) geführt ist und außenseitige Druckluftleckagen durch einen in eine außen umlaufende Ringnut eingesetzten Dichtungsring (38) unterbindbar sind, dass der Primärsteuerkolben (13) ferner an seiner Rückseite eine Schulter, mit der er an dem die Grundstellung definierenden Organ (17) zur Anlage kommt, außerdem an seiner Vorderseite die sich die andernendes an der Zwischenboden-Rückseite abstützende Rückstelldruckfeder (15) kontert und ein sie hinterschneidende kreiszylindrische Vertiefung (39) aufweist, an deren Boden ein den Eintrittsbereich des zentralen Überströmkanals (28) definierender Ringvorsprung angeordnet ist, dessen vordere Stirnfläche die Ventilsitzringfläche (41) des hinteren Absperrventils (27) bildet.

9. Vorrichtung nach Anspruch 3, **dadurch gekennzeichnet, dass** die beiden Kolbenabschnitte (18, 19) des Sekundärsteuerkolbens (14) jeweils durch kreiszylindrische, im wesentlichen ebene Scheiben gebildet sind, wobei der vordere Kolbenabschnitt (18) mit seiner zylindrischen Außenseite leichtgängig axial verschiebbar in der Aufnahmebohrung (3) des Gehäuses (2) geführt und von mehreren Durchlässen (45) durchsetzt ist, die eine ungehinderte Kommunikation der in den Einspeiseraum (9) eingeleiteten Druckluft zwischen dem vor den Kolbenabschnitt (18) befindlichen Teilraum und dem hinter dem Kolbenabschnitt (18) befindlichen Teilraum des Einspeiseraums (9) ermöglichen.

10. Vorrichtung nach einem der Ansprüche 3, 8 und 9, **dadurch gekennzeichnet, dass** der hintere Kolbenabschnitt (19) am Sekundärsteuerkolben (14) einen gegenüber dem vorderen Kolbenabschnitt (18) kleineren und solchen Durchmesser seiner zylindrischen Außenseite hat, dass er in der kreiszylindrischen Vertiefung (39) des Primärsteuerkolbens (13) eingetaucht leichtgängig axial verschiebbar geführt ist, und dass der hintere Kolbenabschnitt (19) von mehreren Durchlässen (40) durchsetzt ist, die eine ungehinderte Kommunikation der im Steuerdruckraum (11) befindlichen Druckluft zwischen dem vor dem Kolbenabschnitt (19) befindlichen Teilraum und dem hinter dem Kolbenabschnitt (19) befindlichen Teilraum des Steuerdruckraums (11) ermöglichen.

11. Vorrichtung nach Anspruch 1, **dadurch gekennzeichnet, dass** die den Sekundärsteuerkolben (14) beaufschlagende Rückstellfeder (16) sich entweder
- zwischen der Rückseite des Zwischenbodens (12) und der Vorderseite des hinteren Kolbenabschnitts (19), oder
- zwischen dem vorderen Deckel (5) des Gehäuses (2) und der Vorderseite des vorderen Kolbenabschnitts (18)
erstreckt.

12. Vorrichtung nach Anspruch 1, **dadurch gekennzeichnet, dass** der Stößel (32; 32/1, 32/2), mit dem die Funktion des 3/2-Wegesteuerventils (1) für eine Druckluftzuführung zum Druckraum (24) des Druckzylinders (25) aktivierbar und steuerbar ist, zweiteilig ausgebildet ist.

13. Vorrichtung nach Anspruch 12, **dadurch gekennzeichnet, dass** ein erstes Stößelteil (32/1) koaxial zur Ventilachse durch den hinteren Gehäuse-Deckel (4) in den Innenraum des 3/2-Wegesteuerventils (1) hineingeführt ist und dort mechanisch auf ein zweites Stößelteil (32/2) einwirkt, das in der Aufnahmebohrung (3) des Gehäuses (2) axial leichtgängig verschiebbar geführt ist, in unausgelenkter Grundstellung an einem rückwärtigen Anschlag (33) anliegt und bei einer vom Stößelteil (32/1) initiierten Verschiebung diese Bewegung über die vorne an ihm abgestützte und zentrierte Steuerdruckfeder (31) auf den Primärsteuerkolben (13) für dessen Axialverschiebung überträgt.

14. Vorrichtung nach Anspruch 1, **dadurch gekennzeichnet, dass** der Stößel (32) axial leichtgängig verschiebbar in bzw. an einem Primärsteuerkolbenteil (35) geführt ist, das fest an der Rückseite des Primärsteuerkolbens (13) angeformt oder befestigt und koaxial zur Ventilachse hinten aus dem Gehäuse (2) des 3/2-Wegesteuerventils (1) herausgeführt ist, und dass zwischen einander zugewandten Schultern (36, 37) am Stößel (32) und Primärsteuerkolbenteil (35) die Steuerdruckfeder (31) aufgenommen ist.

15. Vorrichtung nach einem der Ansprüche 1, 13 und 14, **dadurch gekennzeichnet, dass** die Steuerdruckfeder (31) eine solche Federcharakteristik hat, dass sich in jeder Betätigungsstellung des Stößels (32; 32/1, 32/2) eine gewisse Zeit nach Erreichen derselben und nach erfolgter Druckluftzufuhr zum Druckraum (24) im Druckzylinder (25) in Bezug auf die Rückstellkräfte der Rückstelldruckfedern (15 und 16) ein Kräftegleichgewicht einstellt, das ein Wieder-Schließen des vorher für Druckluftdurchlass geöffneten vorderen Absperrventils (29) zulässt.

16. Vorrichtung nach Anspruch 1, **gekennzeichnet durch** ihre Anwendung in einem Kraftfahrzeug, wobei die Gerätschaft eine Kupplung (50) zwischen Motor und Getriebe ist, die über ein Gestänge (51) am Kolben (52) eines Nehmerzylinders (53) angelenkt ist, dessen Druckraum (54) hydraulisch über eine Druckleitung (55) mit dem hydraulischen Ausgangsdruckraum (56) des in diesem Anwendungsfall als Geberzylinder fungierenden Druckzylinders (25) verbunden ist, wobei in diesem Fall die Betätigung des Stößels (32) zur Aktivierung des 3/2-Wegesteuerventils (1) **durch** Niedertreten eines Pedals oder **durch** Aktivierung eines Stellmotors erfolgt.
